# EUROPEAN PATENT APPLICATION

(11) **EP 4 749 564 A1**
(43) Date of publication of application: **27.05.2026**
(21) Application number: 25198453.0
(22) Date of filing: 27.08.2025
(51) Int. Cl.: G06T 5/20, G06T 5/50

(54) **IMAGE PROCESSING METHOD AND APPARATUS**

(30) Priority: 20.11.2024 KR 20240166336
(71) Applicant: Samsung Electronics Co., Ltd, Suwon-si, Gyeonggi-do 16677 (KR)
(72) Inventor: JANG, Seokhwan, 16678 Suwon-si (KR); SON, Minjung, 16678 Suwon-si (KR); LEE, Juyoung, 16678 Suwon-si (KR); KANG, Nahyup, 16678 Suwon-si (KR)
(74) Representative: Marks & Clerk LLP

(57) **Abstract**

Provided is an image processing method. The method includes obtaining an input image, obtaining a sampling grid in which offset information is assigned to a predefined pixel grid, and applying the sampling grid to the input image to reconstruct pixels of the input image to generate a reconstructed image, wherein the offset information may include reconstruction location information for each pixel of the predefined pixel grid.

## Description

### 1. Field

One or more example embodiments of the disclosure relate to an image processing method, a non-transitory computer-readable storage medium and an electronic device.

### 2. Description of Related Art

In the fields of computer graphics and image processing, complex computational techniques have been continuously developed to implement visual effects that are close to reality. In particular, rendering techniques based on physical characteristics may generate high-quality images, but an amount of computation required to generate the high-quality images may be substantial. A large amount of computation may mainly arise from processing noisy images and achieving visually smooth results. Therefore, various techniques are being studied to reduce the amount of computation while effectively removing noise.

In the related art, post-processing of images using particular algorithms or filters has been mainly used, but recently, data processing schemes based on artificial intelligence have been increasingly gaining attention. These techniques may utilize multiple sample images or combine temporal and/or spatial information to produce high-quality results. However, existing technologies may still face challenges due to a high amount of computation that may occur when processing sample images individually or combining multiple images.

Furthermore, there is a need for a method of obtaining images with reduced noise.

The above information is presented as background information only to assist with an understanding of the disclosure. No determination has been made, and no assertion is made, as to whether any of the above might be applicable as prior art with regard to the disclosure.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to an aspect of an example embodiment of the disclosure, there is provided an image processing method including obtaining an input image, obtaining a sampling grid in which offset information is assigned to a predefined pixel grid, and applying the sampling grid to the input image to reconstruct pixels of the input image to generate a reconstructed image, wherein the offset information may include reconstruction location information for each pixel of the predefined pixel grid.

The image processing method may further include generating a final image by filtering the reconstructed image using a kernel weight.

The generating of the final image may include obtaining the kernel weight by inputting the input image to an artificial neural network (ANN) model.

The obtaining of the sampling grid may include obtaining the offset information from the ANN model.

The ANN model may be learned to output the kernel weight and the offset information.

The obtaining of the input image may include obtaining a plurality of input images and configuring three-dimensional (3D) volume data by concatenating the plurality of input images.

The obtaining of the sampling grid may include obtaining a sampling grid in which 3D offset information is assigned to a predefined two-dimensional (2D) pixel grid, wherein the 3D offset information may include the reconstruction location information indicating a particular location within the 3D volume data for each pixel of the predefined 2D pixel grid.

The obtaining of the plurality of input images may include obtaining a current rendering image corresponding to a current step, and obtaining an accumulated rendering image in which samples corresponding to steps preceding the current step are accumulated, wherein the configuring of the 3D volume data may include configuring the 3D volume data by concatenating the current rendering image and the accumulated rendering image.

The obtaining of the plurality of input images may include obtaining a plurality of captured images taken continuously over a predetermined period of time, and the configuring of the 3D volume data may include configuring the 3D volume data by concatenating the plurality of captured images.

The generating of the reconstructed image may include generating one of the reconstructed images by applying the sampling grid to the 3D volume data.

A size of the final image may be determined based on the size of a predefined pixel grid.

The offset information may include a plurality of pieces of reconstruction location information assigned to each pixel of the predefined pixel grid, and the generating of the final image may include generating the final image by convolving the plurality of pieces of reconstruction location information with the kernel weight.

A size of the kernel weight may be determined based on a size of the plurality of pieces of reconstruction location information.

The reconstructed image may have a higher resolution than a resolution of the input image.

According to an aspect of an example embodiment of the disclosure, there is provided an electronic device including at least one processor including processing circuitry, and a memory configured to store instructions, wherein the instructions, when executed by the at least one processor individually or collectively, cause the at least one processor to: obtain an input image, obtain a sampling grid in which offset information is assigned to a predefined pixel grid, and apply the sampling grid to the input image to reconstruct pixels of the input image to generate a reconstructed image, wherein the offset information may include reconstruction location information for each pixel of the predefined pixel grid.

The instructions, when executed by the at least one processor individually or collectively, may cause the at least one processor to generate a final image by filtering the reconstructed image using a kernel weight.

The instructions, when executed by the at least one processor individually or collectively, may cause the at least one processor to obtain the kernel weight by inputting the input image to an ANN model.

The instructions, when executed by the at least one processor individually or collectively, may cause the at least one processor to obtain a plurality of input images, and configure 3D volume data by concatenating the plurality of input images.

Other features and aspects will be apparent from the following detailed description, the drawings, and the claims.

### BRIEF DESCRIPTION OF DRAWINGS

The above and other aspects, features, and advantages of certain embodiments of the disclosure will be more apparent from the following detailed description, taken in conjunction with the accompanying drawings, in which:
FIG. 1 is a diagram illustrating an image processing system according to an embodiment;
FIG. 2 is a diagram illustrating an adaptive pixel reconstruction process according to an embodiment;
FIG. 3 is a diagram illustrating a process of generating a final image by additionally performing post-processing on a reconstructed image according to an embodiment;
FIG. 4 is a diagram illustrating an example of processing a plurality of images captured continuously to generate a high-quality final image;
FIG. 5 is a diagram illustrating a structure and operation process of a convolutional neural network (CNN)-based neural ray reconstruction (NRR) network according to an embodiment;
FIGS. 6A and 6B are diagrams illustrating a method of generating a final image by performing pixel reconstruction and filtering using a plurality of pieces of reconstruction location information according to an embodiment;
FIG. 7 is a diagram illustrating a structure and operation of a CNN-based NRR network that generates a final image by integrating pixel reconstruction and filtering using a plurality of pieces of reconstruction location information;
FIG. 8 is a diagram illustrating a method of generating a reconstructed image using a sampling grid of a different size from an input image according to an embodiment;
FIG. 9 is a flowchart illustrating an image processing method according to an embodiment; and
FIG. 10 is a diagram illustrating an electronic device according to an embodiment. detailed description

The following detailed structural or functional description of embodiments is provided as an example only and various alterations and modifications may be made to the embodiments. Here, the embodiments are not construed as limited to the disclosure and should be understood to include all changes and replacements within the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if it is described that a component is "connected", "coupled", or "joined" to another component, a third component may be "connected", "coupled", and "joined" between the first and second components, although the first component may be directly connected, coupled, or joined to the second component. On the contrary, it should be noted that if it is described that a component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It will be further understood that the terms "comprises/comprising" and/or "includes/including" when used herein, specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which the present disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

The embodiments may be implemented as various types of products such as, for example, a personal computer (PC), a laptop computer, a tablet computer, a smartphone, a television (TV), a smart home appliance, an intelligent vehicle, a kiosk, and a wearable device. Hereinafter, embodiments will be described in detail with reference to the accompanying drawings. In the drawings, like reference numerals are used for like elements.

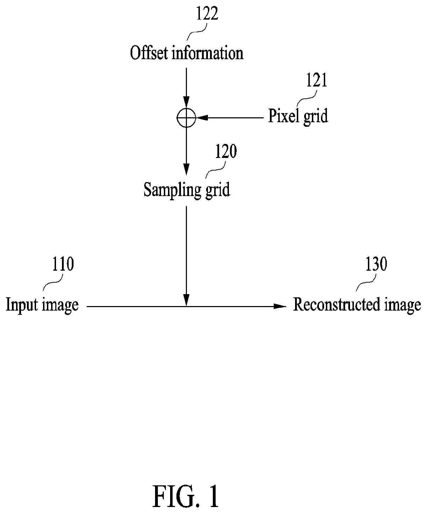

FIG. 1 is a diagram illustrating an image processing system according to an embodiment.

Referring to FIG. 1, an image processing system according to an embodiment may convert an input image 110 into a reconstructed image 130, and efficiently perform a reconstruction process by utilizing a sampling grid 120, a pixel grid 121 making up the sampling grid 120, and offset information 122.

The input image 110 according to an embodiment may be original data, which may be a starting point for image processing. The input image 110 may be provided in various forms. For example, a rendered image may include a low-noise or high-noise image generated in a computer graphics environment. Additionally, in a case of continuously captured images, data captured in an environment having varying levels of noise may be processed through a plurality of images captured continuously over a short period of time. In addition, the input image 110 may be utilized to perform denoising or enhance resolution in a single image, or to process data obtained from multiple sensors.

The reconstructed image 130 according to an embodiment may be an image with reduced noise or improved resolution as a result of processing the input image 110. The reconstructed image 130 may be generated by processing a single image, or may be generated based on volume data generated by concatenating a plurality of images. For example, the plurality of images may include a current rendering image corresponding to a current step, and an accumulated rendering image in which samples corresponding to steps preceding the current step are accumulated. For example, a denoised image may be generated by processing data input in a high-noise environment, or an image with higher resolution may be generated based on a single low-resolution input image. The reconstructed image 130 may not simply a result of post-processing but may effectively reconstruct information contained in the input data to provide a high-quality image.

The sampling grid 120 according to an embodiment may be an important medium to generate the reconstructed image 130 based on data of the input image 110. The sampling grid 120 may include the pixel grid 121 and the offset information 122 and may provide location information for sampling particular data from the input image 110. The sampling grid 120 may be the same size as the input image 110, or larger or smaller than the size of the input image 110 and may be utilized to generate reconstructed images of various sizes. In particular, the sampling grid 120 may be optimized based on learning and may dynamically provide location information required for efficient reconstruction.

The pixel grid 121 according to an embodiment may be a two-dimensional (2D) data structure that defines locations of pixels in the input image 110 and serves as a basis for the sampling grid 120. In an embodiment, the pixel grid 121 may have a regular grid structure, and a location of each pixel in the input image 110 may be defined at predetermined intervals. However, in certain situations, an irregular grid structure may be applicable. For example, the disclosure may be effectively applied when an image in which pixels are irregularly arranged depending on an arrangement of a sensor is to be processed.

The offset information 122 according to an embodiment may define a location to which each pixel of the pixel grid 121 indicates in the input data. The offset information 122 may be a core component of the sampling grid 120 that allows for selective sampling of particular data of the input image 110. The offset information 122 may be divided into cases where a 2D location is defined in a single image and cases where a three-dimensional (3D) location is defined in volume data in which a plurality of images are concatenated. This information may be learned through a neural network model and designed to select most efficient data during a reconstruction process.

The image processing system according to an embodiment may generate the sampling grid 120 based on the input image 110 and thereby convert data into the reconstructed image 130. This process may be equally applied to processing 3D volume data generated by concatenating a plurality of images as well as to processing a single image. This may allow the image processing system to provide a high-quality reconstructed image while reducing an amount of computation compared to existing technologies.

More specifically, by processing a single image or a plurality of input images to generate a reconstructed image, and by applying filtering to only one reconstructed image without having to individually process an entire input image, the image processing system may significantly reduce the amount of computation.

A rendering scheme using Monte Carlo (MC) path tracing has become a main technology to implement physically based realistic visual effects, but this approach may require a very large number of samples per pixel (SPP). The large number of SPP may lead to an increase in the amount of computation, making it inefficient for real-time applications or large-scale data processing. To solve this problem, a ray reconstruction scheme that performs denoising with only one SPP or a few SPP has been proposed, and recently, artificial intelligence (AI)-based neural ray reconstruction (NRR), which mainly uses a kernel prediction scheme, has been introduced as an extension of the ray reconstruction scheme.

The kernel prediction scheme may be a filtering technique that estimates a kernel map from an input image and uses the estimated kernel map to remove noise, and provides superior performance compared to a regression scheme of a convolutional neural network (CNN). However, since the existing kernel prediction scheme individually generates a kernel map and performs filtering for each sample image, the amount of computation may increase significantly as a number of sample images increases. For example, when multiple low-SPP images are processed, kernel map estimation and filtering have to be performed for each image, which may increase an overall amount of computation. In addition, a temporal accumulation (TA) scheme may utilize temporal characteristics between frames, but a problem of a high computational load due to multiple images being processed together may be unavoidable.

The image processing system according to an embodiment may generate a single reconstructed image by generating 3D volume data by concatenating a plurality of images or by directly processing a single image. Since the reconstructed image that is generated is processed as a single object, the problem of an increased computational load due to multiple filtering that occurs in existing techniques may be solved. For example, unlike the existing scheme in which a plurality of sample images are individually filtered, the disclosure may generate a single reconstructed image and apply filtering only to the single reconstructed image. Accordingly, processing efficiency may be greatly improved.

In addition, the sampling grid 120 used in the disclosure may be efficiently configured through learned offset information 122 and the pixel grid 121 and may determine a location where optimal data may be sampled for each pixel. This may allow denoising performance to be maximized while the amount of computation may be minimized.

The image processing system according to an embodiment may have a general-purpose structure that may be utilized in various technical fields. The image processing system may efficiently perform a process of receiving the input image 110 and generating the reconstructed image 130, and the sampling grid 120 and the offset information 122, which are key technologies in this process, and may be utilized in various application fields such as denoising, resolution enhancement, and data restoration.

The image processing system may be particularly useful in a field of computer graphics. As described above, the image processing system may significantly reduce the amount of computation by generating a high-quality reconstructed image based on a low-SPP image. The image processing system may be effectively applied in an application environment that require high-speed processing, such as real-time rendering.

The image processing system may be used in a field of image processing. For example, the image processing system may be applied to a task of denoising and/or increasing a resolution of an image taken in a low-light environment by a digital camera or a smartphone. These features may be widely used in a consumer application such as photo retouching and high-quality image generation.

The image processing system may be applied to medical image processing. Medical image data may often contain noise, and removing the noise may be important to improve accuracy of a diagnosis. The image processing system may be utilized to convert a low-resolution computed tomography (CT) image, a magnetic resonance imaging (MRI) image, and/or an ultrasound image into a high-resolution image and/or to combine multiple medical image data to generate a high-quality reconstructed image.

An application potential of the image processing system may also be great in a field of satellite image processing. An image captured by a satellite camera may often contain noise due to atmospheric conditions and/or sensor limitations. By removing such noise and converting a low-resolution satellite image into a high-resolution satellite image, the image processing system may play an important role in a variety of satellite applications, including environmental monitoring, disaster analysis, and map making.

In a field of multi-sensor data fusion, data collected from multiple sensors may be effectively integrated through the image processing system. For example, the image processing system may combine data from a thermal camera and a visible-light camera to provide more information, and/or process data collected from a device such as a drone to generate a high-quality reconstructed image.

The image processing system may be useful in video processing. The image processing system may remove noise from each frame of a video and improve quality through temporal accumulation. In particular, the image processing system may effectively reduce the amount of computation by performing filtering by generating a single reconstructed frame rather than processing multiple frames individually.

In addition, the image processing system may be used in deep learning-based data restoration and optimization tasks. By applying the sampling grid of the disclosure to the sampling and reconstruction operation of high-dimensional volume data, data may be efficiently reconstructed, the amount of computation may be reduced, and the quality of the results may be improved.

Therefore, the image processing system may be utilized as a powerful tool to solve various technical issues such as denoising, data restoration, resolution enhancement, and multi-sensor data integration.

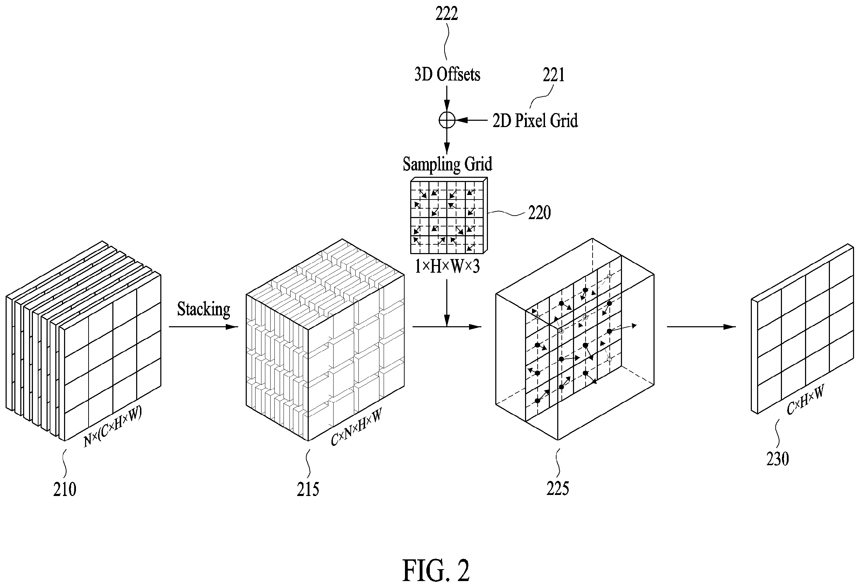

FIG. 2 is a diagram illustrating an adaptive pixel reconstruction process according to an embodiment. The description provided with reference to FIG. 1 may also apply to FIG. 2.

Referring to FIG. 2, an image system according to an embodiment may generate a single reconstructed image 230 with reduced noise based on multiple input images 210 with different noise characteristics.

The input image 210 according to an embodiment may include multiple images, and each image may have the same size H×W and the same number of channels C. The input images 210 may be concatenated along a new dimension N and converted into 3D volume data 215 of a size of C×N×H×W. This process may be performed by stacking each input image. Here, N denotes the number of input images, and each image may be data obtained at a particular time, sensor, and/or sampling condition.

The generated 3D volume data 215 may be used for an adaptive sampling process. For this purpose, a 2D pixel grid 221 having the same size H×W as the input image 210 may be defined. The pixel grid 221 may be assigned to offset information 222 to refer to a particular location within the volume data. The offset information 222 may include location information in a 3D space and may dynamically determine an optimal sampling location based on learned data. For example, the offset information 222 may be used to select data in the depth (N dimension) and spatial coordinates (H, W) of the volume data.

The 2D pixel grid 221 and the offset information 222 may be combined to generate a sampling grid 220. The sampling grid 220 may have a size of 1×H×W×3 and may represent particular coordinates within the volume data at each pixel location. The sampling grid 220 may select data by considering various noise characteristics of the volume data, thereby obtaining an optimal reconstruction result.

The sampling grid 220 may be applied to the generated volume data 215 to extract suitable data 225 within the volume data, thereby generating the reconstructed image 230 of a size of C×H×W. The reconstructed image 230 may have the characteristic of effectively denoising the input image 210 while preserving the details of the original data.

FIG. 2 shows how adaptive pixel reconstruction may generate a single high-quality image from input images with different noise characteristics. This process may make full use of the spatial and channel characteristics of the input data using a learned sampling grid, providing high-quality results while reducing the amount of computation compared to existing denoising schemes. The adaptive pixel reconstruction structure may be usefully applied in a variety of applications such as rendering, image processing, medical imaging, and satellite imaging.

A learning process of the sampling grid according to an embodiment may be performed based on a neural network model, and the neural network model may be learned to minimize a difference between input data and target data (e.g., a high-quality reference image). A loss function used in the learning process may be used to quantify a quality of reconstruction and improve performance of the neural network model. For example, the loss function may include L1 or L2 loss, which calculates a pixel difference between input data and target data, structural similarity index measure (SSIM) that evaluates structural similarity, or perceptual loss, which reflects human visual quality. Based on the loss function, the neural network model may iteratively optimize the sampling grid and the offset information, thereby generating high-quality reconstructed images from input data.

In particular, the offset information may define an optimal sampling location that a particular pixel location in the volume data may refer to. During the learning process, the offset information may be dynamically determined by considering noise distribution and spatial characteristics of data, which may greatly improve the efficiency of the reconstruction process. For example, the offset information may be designed to selectively sample locations in the depth dimension of the volume data, or to reflect detailed spatial features within an input image.

Furthermore, in FIG. 2, the adaptive pixel reconstruction process is described based on the input image 210 including multiple images, but the input image 210 may be a single image as described above. In this case, the reconstruction process may be somewhat differentiated, and the processing process when the input image is single may be described by using the description of FIG. 2.

When the input image 210 is a single image, the process of concatenating and configuring 3D volume data 215 may be omitted. Instead, the single image itself may be sampled, and the offset information may contain 2D offset information. The 2D offset information may be particular coordinates within a single image at each pixel location, which may be used to select data to sample based on spatial features of the input image.

A sampling grid may be generated based on a pixel grid corresponding to the size H×W of the single input image and 2D offset information. The sampling grid may provide information for selecting appropriate data within the input image at each pixel location, and the selection process may be performed dynamically by a learned model. As a result, even when processing a single image, a reconstructed image of the size C×H×W may be generated using the sampling grid.

The processing scheme of a single image may provide the same technical effect as using multiple images. In other words, it may be possible to efficiently generate a reconstructed image while removing noise or preserving particular features of the image. In particular, when processing a single image, there may be an advantage in that the amount of computation is further reduced because the concatenation and volume data generation processes are omitted. Therefore, the image processing system according to an embodiment may be flexibly and efficiently applied in all cases where the input image 210 is a single image or a plurality of images.

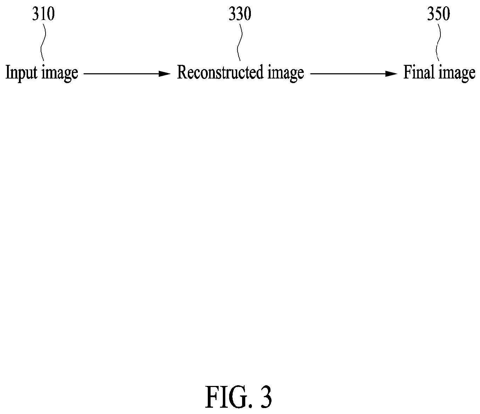

FIG. 3 is a diagram illustrating a process of generating a final image by additionally performing post-processing on a reconstructed image according to an embodiment. The description provided with reference to FIGS. 1 and 2 may also apply to FIG. 3.

Referring to FIG. 3, an image processing system according to an embodiment may provide a final image 350 of a quality desired by a user by supplementing deficiencies in a reconstructed image 330.

An input image 310 according to an embodiment may be converted into the reconstructed image 330 through an adaptive pixel reconstruction process. The reconstructed image 330 may be a high-quality intermediate result generated by reducing noise included in the input image 310 and preserving original data of the input image 310 as much as possible. Additional processing may be performed on the reconstructed image 330 to generate the final image 350. The final image 350 may simply be a denoised result, or may be implemented in various forms, such as improving the resolution of the input data or emphasizing particular features.

The final image 350 may be utilized in various applications. For example, in a case of a noisy input image 310, a significant amount of noise may already be removed from the reconstructed image 330, but additional filtering may be performed to completely remove any remaining residual noise. This may result in a visually smooth and high-quality final image 350. Additionally, a high-resolution final image 350 with vivid details may be generated from a low-resolution input image 310 through a super-resolution processing process that increases the resolution. Emphasizing particular features may also be possible, for example by enhancing edges, correcting colors, and/or adjusting contrast to achieve a desired visual effect.

The final image 350 may be utilized for special purpose data such as a medical image or a satellite image as well as for image processing. The medical image may be used to restore data captured in a low-light environment and/or improve a resolution of the medical image to improve diagnostic accuracy. In satellite image processing, noise caused by an atmospheric condition may be removed and/or a low-quality image may be converted to a high-resolution image for use in environmental monitoring or disaster analysis. Additionally, in video processing, a reconstructed image may be used as an individual frame, and the high-quality final image 350 may be generated while ensuring smoothness between consecutive frames through a temporal accumulation scheme.

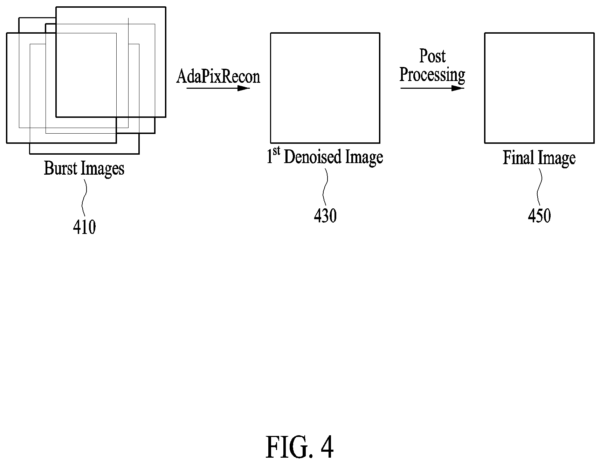

FIG. 4 is a diagram illustrating an example of processing a plurality of images captured continuously to generate a high-quality final image. The description provided with reference to FIGS. 1 to 3 may also apply to FIG. 4.

Referring to FIG. 4, an image processing system according to an embodiment may remove noise based on continuously captured images in a situation where a lot of noise occurs, such as a low-light environment, and ultimately generate a high-quality image.

Input data may include a plurality of images captured continuously over a short period of time, for example, burst images 410. The burst images 410 may be a series of images taken at short time intervals of the same scene, and each image may contain different noise patterns due to characteristics of a camera sensor. The noise patterns may often be difficult to remove from a single image, but the effect of denoising may be maximized by integrating and processing data from a plurality of images.

The burst images 410 may be converted into a 1^{st} denoised image 430 through adaptive pixel reconstruction (AdaPixRecon). The 1^{st} denoised image 430 may be the reconstructed image as described with reference to FIGS. 1 to 3. In this process, volume data generated by concatenating a plurality of images and a sampling grid may be used to select optimal data at each pixel location and noise may be removed based on the selected optimal data. As a result, the 1^{st} denoised image 430 may be generated with most of the noise removed while preserving key information contained in the input data.

The 1^{st} denoised image 430 may be converted into a final image 450 through post-processing. The post-processing may include a variety of operations such as filtering, super-resolution processing, and color correction, which may adjust the quality of the final image to suit a user's requirements. For example, the post-processing may include removing residual noise, enhancing details, and/or improving particular visual characteristics.

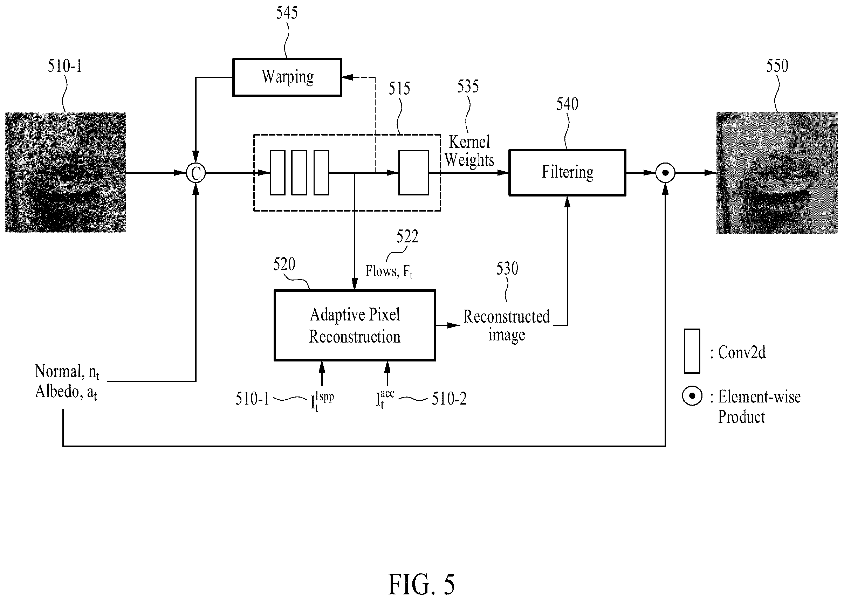

FIG. 5 is a diagram illustrating a structure and operation process of a CNN-based neural ray reconstruction (NRR) network according to an embodiment. The description provided with reference to FIGS. 1 to 4 may also apply to FIG. 5.

Referring to FIG. 5, an image processing system according to an embodiment may perform adaptive pixel reconstruction using an image rendered with a low-SPP, an image rendered through temporal accumulation (TA), and auxiliary data as input, and ultimately generate a high-quality denoised image.

The image processing system according to an embodiment may include an NRR network. The NRR network may include a convolutional layer 515, an adaptive pixel reconstruction module 520, and a filtering module 540. However, not all the illustrated components may be included in an embodiment. The image processing system may be implemented by more components than those illustrated, or with fewer components.

Further, the term "module" used in FIG. 5 may be a unit including one of, or a combination of two or more of, hardware, software, and firmware. The term "module" may be used interchangeably with other terms, for example, "unit", "logic", "logical block", "component", or "circuit". The "module" may be a minimum unit of an integrally formed component or part thereof. The "module" may be a minimum unit for performing one or more functions or part thereof. The "module" may be implemented mechanically or electronically. For example, the "module" may include any one or any combination of an application-specific integrated circuit (ASIC) chip, field-programmable gate arrays (FPGAs), or a programmable-logic device that performs a corresponding operation.

Input data may provide basic information for generating low-noise images. An image (e.g., an image 510-1 rendered with 1 SPP) rendered with a low-SPP may be noisy due to the low sample count but may require less computation to process the image. A TA image 510-2 generated by accumulating samples within a predetermined time interval may have relatively less noise but may still be imperfect. For example, the image 510-1 may correspond to a current rendering image corresponding to a current step, and the TA image 510-2 may correspond to an accumulated rendering image in which samples corresponding to steps preceding the current step are accumulated. Additionally, a G-Buffer may provide additional information about an input scene. For example, auxiliary data such as normal, albedo, depth, and motion field may include information about surface properties of a pixel and/or motion information of a scene and may be used to improve the accuracy of the adaptive pixel reconstruction.

The convolution layer 515 according to an embodiment may receive the image 510-1 rendered with a low-SPP and auxiliary data and output kernel weights 535. The adaptive pixel reconstruction module 520 may receive the TA image 510-2 and the image 510-1 rendered with a low-SPP and may generate 3D volume data by concatenating the TA image 510-2 and the image 510-1 rendered with a low-SPP. The adaptive pixel reconstruction module 520 may correct pixel locations based on offset information 522 and generate the reconstructed image 530. The offset information may be data estimated through network learning and may be used as 3D offset information.

The reconstructed image 530 generated by the adaptive pixel reconstruction module 520 may be an intermediate result from which noise is primarily removed and may be subsequently passed on to the filtering module 540. The filtering module 540 may selectively process pixel data of the reconstructed image 530 using the learned kernel weights 535 and may enhance details and remove residual noise.

The filtering process may perform additional processing operations on the reconstructed image 530, thereby converting the reconstructed image 530 into a high-quality image. The kernel weights 535 used in the filtering process may be learned to reflect the characteristics of the input data and the noise distribution. A neural network model may learn kernel weights that minimize a visual quality difference between the input data and target data, and the kernel weights may be used to perform processing suitable for each pixel during the filtering process. For example, in areas with a lot of high-frequency components, the kernel weights may work in a manner that removes noise while preserving detail, and in areas where low-frequency components dominate, softer filtering may be applied.

A filtered result may be multiplied element-wise with albedo data aₜ to generate a final image 550. This process may help correct color data of pixels based on reflectivity information, thereby increasing realism of the final output image 550.

A warping module 545 may be optionally provided and may play a role in estimating motion vectors. Motion vectors may be used to compensate for temporal motion at a pixel level, thereby reducing distortion between an accumulated image and a current image. The motion vectors generated in the warping module 545 may be utilized as auxiliary data in a subsequent operation and may be input into the convolutional layer 515 to contribute to generating the kernel weights 535 used for filtering.

The image processing system according to an embodiment may estimate the offset information 522 and the kernel weights 535 together. Rather than filtering each of the two rendered images (e.g., the TA image 510-2 and the image 510-1 rendered with a low-SPP) used as input, the image processing system may first obtain the reconstructed image 530 from which noise has been removed primarily, and then apply filtering thereto to derive the final image 550 with the noise ultimately removed. In other words, the image processing system may learn a sampling grid optimized for denoising without separate training for learning adaptive pixel reconstruction.

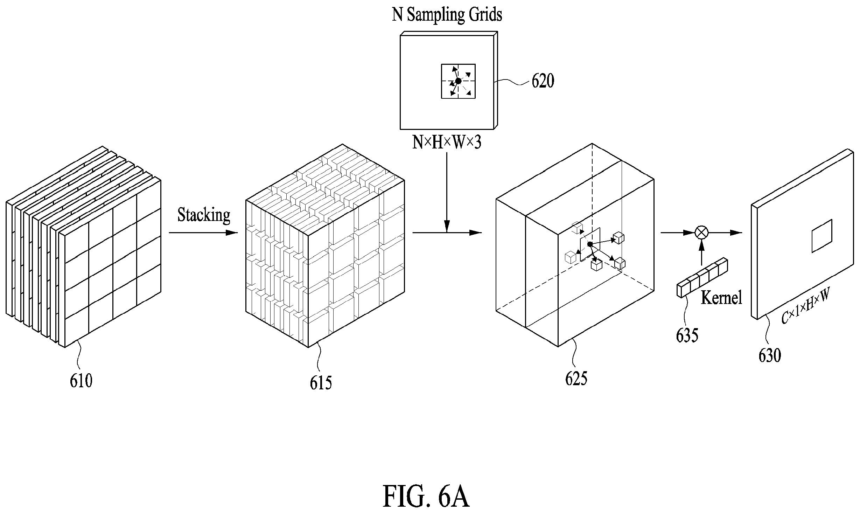

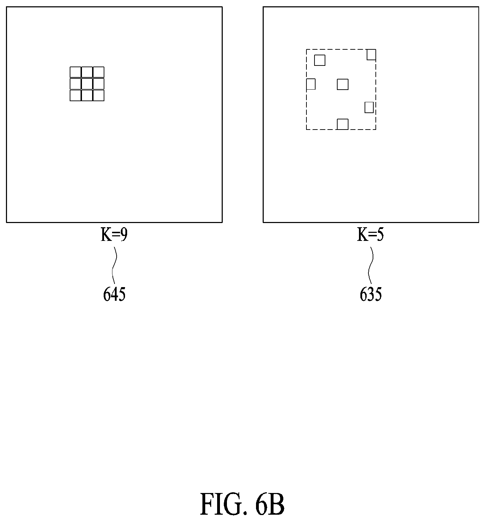

FIGS. 6A and 6B are diagrams illustrating a method of generating a final image by performing pixel reconstruction and filtering using a plurality of pieces of reconstruction location information according to an embodiment. The description provided with reference to FIGS. 1 to 5 may also apply to FIGS. 6A and 6B.

Referring to FIG. 6A, volume data 615 according to an embodiment may be data generated by stacking a plurality of input images 610 and may provide a plurality of pieces of reconstruction location information for each pixel through a sampling grid 620. The sampling grid 620 may designate an appropriate sampling location within the volume data 615 for each pixel, which may provide information 625 needed to perform convolution with kernel weights during a reconstruction process.

An image processing system according to an embodiment may obtain not one, but a plurality of pieces of reconstruction location information for each pixel, through the sampling grid 620. The reconstruction location information may be used in an adaptive pixel reconstruction and filtering process and may contribute to generating a final image 630 by performing a convolution operation with kernel weights 635. The image processing system may perform image processing more efficiently and flexibly than existing schemes by integrating filtering and pixel reconstruction into a single process.

The reconstruction location information may indicate an appropriate sampling location of data for each pixel, and the kernel weights may be dynamically set according to a number of pieces of corresponding reconstruction location information. For example, when five pieces of reconstruction location information are provided for each pixel, five kernel weights may be used, which may allow filtering and pixel reconstruction to be performed simultaneously.

Referring to FIG. 6B, according to an embodiment, when the pixel reconstruction and filtering are performed by utilizing a plurality of pieces of reconstruction location information, instead of using a kernel 645 having a fixed size and shape (e.g., a 3×3 matrix), a kernel having the kernel weights 635 equivalent to the number (e.g., 5) of pieces of reconstruction location information may be used. In other words, the image processing system according to an embodiment may perform filtering and pixel reconstruction in an integrated manner, reduce the amount of computation, and improve image quality by dynamically setting the kernel weights based on the plurality of pieces of reconstruction location information.

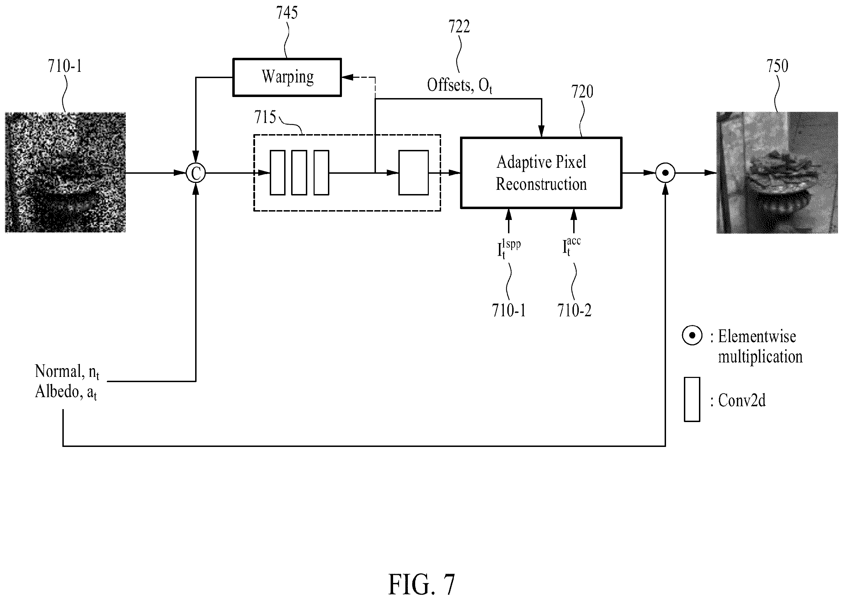

FIG. 7 is a diagram illustrating a structure and an operation of a CNN-based NRR network that generates a final image by integrating pixel reconstruction and filtering using a plurality of pieces of reconstruction location information. The description provided with reference to FIGS. 1 to 6B may also apply to FIG. 7.

The image processing system according to an embodiment may include an NRR network. The NRR network may include a convolutional layer 715 and an adaptive pixel reconstruction module 720. However, not all the illustrated components may be included in an embodiment. The image processing system may be implemented by more components than those illustrated, or with fewer components.

The NRR network may use as input an image 710-1 rendered with a low-SPP and an image 710-2 rendered by accumulating samples over a certain period of time. The adaptive pixel reconstruction module 720 may operate based on input data and offset information 722. The offset information 722 may be data estimated through network learning and may designate a plurality of reconstruction locations, which may be used to determine sampling locations during the pixel reconstruction process.

The convolutional layer 715 may receive an image rendered with a low-SPP and auxiliary data as input, and generate the offset information 722 and kernel weights through learning. The kernel weights may be used as parameters for comprehensively performing pixel reconstruction and filtering and may be utilized in the adaptive pixel reconstruction module 720.

The adaptive pixel reconstruction module 720 may extract and filter pixel data according to reconstruction location information based on the input image and auxiliary data to generate a final image 750. The reconstruction location information may indicate an appropriate sampling location of data for each pixel, and the kernel weights may be dynamically set according to a number of pieces of corresponding reconstruction location information. The NRR network may perform image processing more efficiently and flexibly than existing schemes by integrating filtering and pixel reconstruction into a single process.

A warping module 745 may be optionally provided and may play a role in estimating motion vectors. Motion vectors may be used to compensate for temporal motion at the pixel level, thereby reducing distortion between an accumulated image and a current image. The motion vectors generated in the warping module 745 may be utilized as auxiliary data in a subsequent operation and may be input into the convolutional layer 715 to contribute to generating the kernel weights used for filtering.

Finally, the filtered results and reflectivity data (or albedo data) at may be combined through element-wise multiplication, through which the final image 750 may be generated.

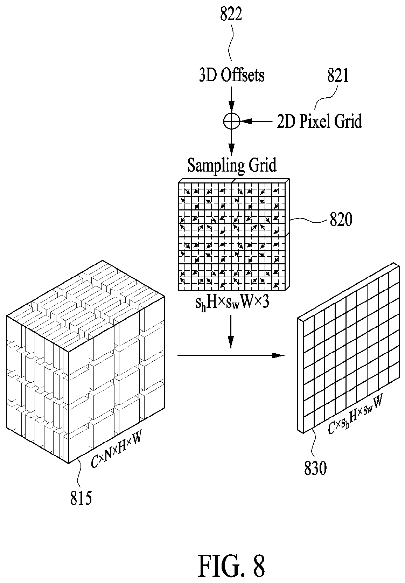

FIG. 8 is a diagram illustrating a method of generating a reconstructed image using a sampling grid of a different size from an input image according to an embodiment. The description provided with reference to FIGS. 1 to 7 may also apply to FIG. 8.

An image processing system according to an embodiment may generate a reconstructed image of a desired size by adjusting a size of a sampling grid regardless of a size of an input image. A sampling grid 820 may be defined by combining a 2D pixel grid 821 and 3D offset information 822. The 2D pixel grid 821 may be used for initializing a sampling location, and the 3D offset information 822 may specifically designate the sampling location within volume data 815. This may allow the sampling grid to efficiently extract the pixel data to be used to generate a reconstructed image from the volume data.

Referring to FIG. 8, the volume data 815 may have a size of C×N×H×W, where C denotes the number of channels, N denotes the number of input images, and H and W denote a height and a width, respectively. The sampling grid 820 may be defined differently from the size of an input image.

A size of the sampling grid 820 may be used to determine a size of the reconstructed image 830. When the size of the sampling grid 820 is sₕH×s_{w}W×n (where n may be 3 when using 3D offset information, and n may be 2 when using 2D offset information), the size of the reconstructed image 830 may become C×sₕH×s_{w}W, and a spatial size (height*width) of the reconstructed image 830 may become the same as a spatial size sₕH×s_{w}W (e.g., a size of the pixel grid 821) of the sampling grid 820. Here, sₕmay be a height scale factor that represents how many times the height of the reconstructed image 830 is enlarged or reduced based on the height of the input image, and s_{w} may be a width scale factor that represents how many times the width of the reconstructed image 830 is enlarged or reduced based on the width of the input image.

The reason the spatial size of the reconstructed image 830 is the same as the spatial size of the sampling grid 820 is that the sampling grid 820 serves as a standard for defining each pixel of the reconstructed image 830. The sampling grid 820 may determine the location of each pixel in the reconstructed image 830 and designate which sample within the input data or volume data to refer to at the corresponding location. Through this process, a spatial structure of the sampling grid 820 may be directly connected to a spatial structure of the reconstructed image 830.

The sampling grid 820 may be configured by combining the pixel grid 821 and the offset information 822. Here, the pixel grid 821 may become the basic framework that determines the spatial resolution of the reconstructed image 830. For example, when the pixel grid 821 of the sampling grid 820 has a size of sₕH×s_{w}W, the reconstructed image 830 may have the same spatial size sₕH×s_{w}W. This is because the offset information that designates the sampling location for each pixel corresponds 1:1 with the pixel location of the sampling grid 820.

Specifically, each pixel of the sampling grid 820 may include the 3D offset information 822 indicating a particular sampling location within the input data or volume data. In the process of generating the reconstructed image 830, data may be extracted by referring to a sampling location designated at each pixel location of the sampling grid 820, and reflected in the corresponding pixel of the reconstructed image 830. Therefore, a number of pixels in the sampling grid 820 may be maintained equal to a number of pixels in the reconstructed image 830.

When the size of the input image is C×H×W and the size of the pixel grid 821 is set to 2H×2W, the reconstructed image 830 may have a size of C×2H×2W, which is four times larger than the input image. When the size of the pixel grid 821 is set to 0.5H×0.5W, the reconstructed image 830 may have a size of C×0.5H×0.5W, which is four times smaller than the input image.

Through the above-described method, the image processing system may flexibly generate an image of a desired size. This approach may be particularly useful in applications that need to process images of varying sizes, rather than relying on input images of a fixed size. For example, when high-resolution images are to be acquired, the sampling grid size may be increased, and when low-resolution processing is to be performed, the sampling grid size may be reduced to efficiently adjust the amount of computation.

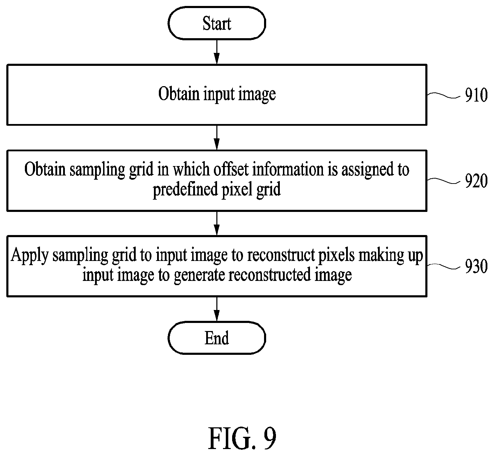

FIG. 9 is a flowchart illustrating an image processing method according to an embodiment. The description provided with reference to FIGS. 1 to 8 may also apply to FIG. 9.

For ease of description, operations 910 to 930 are described as being performed using the image processing system described with reference to FIGS. 1 to 8. However, operations 910 and 930 may be performed by another suitable electronic device in a suitable system.

Furthermore, the operations of FIG. 9 may be performed in the shown order and manner. However, the order of some operations may be changed, or some operations may be omitted, without departing from the scope of the shown embodiment. The operations shown in FIG. 9 may be performed in parallel or simultaneously.

In operation 910, an image processing system according to an embodiment may obtain an input image. The input image may be a single image or a plurality of images. The plurality of images may be images captured sequentially in time or images generated through a rendering process. When a plurality of images is used, the image processing system may generate 3D volume data by concatenating the plurality of images.

In operation 920, the image processing system according to an embodiment may obtain a sampling grid in which offset information is assigned to a predefined pixel grid. The sampling grid may define a plurality of sampling locations for each pixel and may include 3D offset information. Offset information may define the sampling location of pixel data in an input image or volume data and may be learned by a neural network model. The size of the sampling grid may determine the size of a reconstructed image and may be the same or different from the input image. For example, when the reconstructed image has a higher resolution than the input image, the size of the sampling grid may be enlarged.

In operation 930, the image processing system according to an embodiment may apply the sampling grid to the input image to reconstruct pixels that constitute the input image to generate a reconstructed image. The reconstructed image may be spatially matched to the size of the sampling grid. The reconstructed image may be converted into a final image through a filtering process. In the filtering process, kernel weights learned in the neural network model may be used, and the kernel weights may be estimated from the input image. Reconstructed image generation and filtering may also be performed in an integrated manner, in which case pixel reconstruction and filtering may be processed simultaneously, reducing the amount of computation.

The image processing system according to an embodiment may reduce the amount of computation and efficiently generate a high-quality image by generating a single reconstructed image from an input image and then performing filtering on the single reconstructed image. Additionally, the image processing system may flexibly generate reconstructed images of various sizes by enlarging or reducing the resolution of the input image through adaptive pixel reconstruction. This approach may be suitable for applications (e.g., medical imaging, satellite imaging) that require high resolution and/or applications (e.g., real-time processing) that require reduced computational effort at lower resolution.

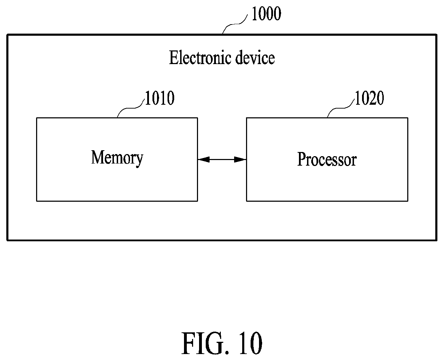

FIG. 10 is a diagram illustrating an electronic device according to an embodiment. The description provided with reference to FIGS. 1 to 9 may substantially identically apply to FIG. 10.

Referring to FIG. 10, an electronic device 1000 may include at least one memory (hereinafter "memory") 1010 and at least one processor (hereinafter "processor") 1020. The electronic device 1000 according to an embodiment may be a device that may include an image processing system and may include, for example but not limited to, various computing devices such as a mobile phone, a smartphone, a tablet computer, a camera device, an e-book device, a laptop, a PC, a desktop computer, a workstation or a server, various wearable devices such as a smart watch, smart glasses, a head-mounted display (HMD) or smart clothes, various home appliances such as a smart TV or a smart refrigerator, and other devices such as a smart vehicle, a smart kiosk, an Internet of things (IoT) device, a walking assist device (WAD), a drone and/or a robot.

The memory 1010 may store instructions (or programs) executable by the processor 1020. For example, the instructions may include instructions for executing an operation of the processor 1020 and/or an operation of each component of the processor 1020.

The memory 1010 may be implemented as a volatile memory device and/or a non-volatile memory device.

The volatile memory device may be implemented as, for example but not limited to, a dynamic random-access memory (DRAM), static random-access memory (SRAM), thyristor RAM (T-RAM), zero capacitor RAM (Z-RAM), or twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM (CBRAM), a ferroelectric RAM (FeRAM), a phase change RAM (PRAM), a resistive RAM (RRAM), a nanotube RRAM, a polymer RAM (PoRAM), a nano floating gate memory (NFGM), a holographic memory, a molecular electronic memory device, or an insulator resistance change memory.

The processor 1020 may process data stored in the memory 1010. The processor 1020 may execute computer-readable code (e.g., software) stored in the memory 1010 and instructions triggered by the processor 1020.

The processor 1020 may be a hardware-implemented data processing device having a circuit that is physically structured to execute desired operations. The desired operations may include, for example, code or instructions included in a program.

The hardware-implemented data processing device may include, for example, a microprocessor, a central processing unit (CPU), a processor core, a multi-core processor, a multiprocessor, an application-specific integrated circuit (ASIC), and an FPGA.

The processor 1020 may obtain an input image, obtain a sampling grid in which offset information is assigned to a predefined pixel grid, apply the sampling grid to the input image, and reconstruct pixels making up or constituting the input image to generate a reconstructed image. The processor 1020 may perform the operations described with reference to FIGS. 1 to 9 in substantially the same manner. Accordingly, a detailed description thereof is omitted.

The examples described herein may be implemented using a hardware component, a software component and/or a combination thereof. A processing device may be implemented using one or more general-purpose or special-purpose computers, such as, for example but not limited to, a processor, a controller and an arithmetic logic unit (ALU), a digital signal processor (DSP), a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and/or generate data in response to execution of the software. For purpose of simplicity, the description of a processing device is singular; however, one of ordinary skill in the art will appreciate that a processing device may include multiple processing elements and multiple types of processing elements. For example, a processing device may include a plurality of processors or a processor and a controller. In addition, different processing configurations are possible, such as parallel processors.

The software may include a computer program, a piece of code, an instruction, or combinations thereof, to independently or collectively instruct or configure the processing device to operate as desired. Software and/or data may be embodied permanently or temporarily in any type of machine, component, physical and/or virtual equipment, computer storage medium or device, and/or in a propagated signal wave capable of providing instructions and/or data to or being interpreted by the processing device. The software also may be distributed over network-coupled computer systems such that the software is stored and executed in a distributed fashion. The software and data may be stored by one or more non-transitory computer-readable recording mediums.

The methods according to the above-described embodiments may be recorded in a non-transitory computer-readable medium including program instructions to implement various operations of the above-described embodiments. The medium may include, alone or in combination with the program instructions, data files, data structures, and the like. The program instructions recorded on the medium may be those specially designed and constructed for the purposes of embodiments, or they may be of the kind well-known and available to those having skill in the computer software arts. Examples of a non-transitory computer-readable medium include a magnetic medium such as a hard disk, a floppy disk, and a magnetic tape; an optical medium such as a CD-ROM disc and a DVD; a magneto-optical medium such as an optical disc; and a hardware device that is specially configured to store and perform program instructions, such as a read-only memory (ROM), a random access memory (RAM), a flash memory, and the like. Examples of program instructions include both machine code, such as produced by a compiler, and files containing higher-level code that may be executed by the computer using an interpreter.

In embodiments of the present disclosure, rather than filtering each of rendered images used as network inputs, an image is first obtained from which noise has been removed primarily, and filtering is applied thereto to derive a final denoised image. The network may learn a sampling grid optimized for noise removal without separate supervision for learning adaptive pixel reconstruction. Noise is reduced since only one image is filtered compared to some of the existing schemes, the amount of computation required for noise removal may be reduced as well. Furthermore, instead of reconstructing by taking one piece of data for each pixel, a plurality of data may be reconstructed by convolving them with kernel weights. In this case, since adaptive pixel reconstruction is performed along with the filtering, the processing step may be simplified, thereby reducing the amount of calculation and improving processing speed.

Embodiments of the present disclosure allow for simplified processing steps comprising reconstruction/convolution steps. Furthermore, continuous convolution is possible, allowing freedom in kernel shape and/or additional weight lightening in computational volume and/or the ability to reconstruct images to any size is possible.

While example embodiments are described with reference to drawings, it will be apparent to one of ordinary skill in the art that various alterations and modifications in form and details may be made in these embodiments without departing from the scope of the claims. For example, suitable results may be achieved if the described techniques are performed in a different order, and/or if components in a described system, structure, device, or circuit are combined in a different manner, and/or replaced or supplemented by other components.

Therefore, other implementations and other examples are also within the scope of the following claims.

## Claims

1. An image processing method comprising:
obtaining an input image;
obtaining a sampling grid in which offset information is assigned to a predefined pixel grid; and
applying the sampling grid to the input image to reconstruct pixels of the input image, to generate a reconstructed image,
wherein the offset information comprises reconstruction location information for each pixel of the predefined pixel grid.

2. The image processing method of claim 1, further comprising:
generating a final image by filtering the reconstructed image using a kernel weight.

3. The image processing method of claim 2, wherein the generating the final image comprises obtaining the kernel weight by inputting the input image to an artificial neural network (ANN) model,
preferably wherein the obtaining the sampling grid comprises obtaining the offset information from the ANN model,
more preferably wherein the ANN model is learned to output the kernel weight and the offset information.

4. The image processing method of any of the preceding claims, wherein the obtaining of the input image comprises:
obtaining a plurality of input images; and
configuring three-dimensional (3D) volume data by concatenating the plurality of input images.

5. The image processing method of claim 4, wherein the obtaining the sampling grid comprises obtaining a sampling grid in which 3D offset information is assigned to a predefined two-dimensional (2D) pixel grid,
preferably wherein the 3D offset information comprises reconstruction location information indicating a particular location within the 3D volume data for each pixel of the predefined 2D pixel grid.

6. The image processing method of any of claims 4-5, wherein the obtaining the plurality of input images comprises:
obtaining a current rendering image corresponding to a current step; and
obtaining an accumulated rendering image in which samples corresponding to steps preceding the current step are accumulated,
wherein the configuring the 3D volume data comprises configuring the 3D volume data by concatenating the current rendering image and the accumulated rendering image,
and/or
wherein the obtaining the plurality of input images comprises:
obtaining a plurality of captured images taken continuously over a predetermined period of time, and
wherein the configuring the 3D volume data comprises configuring the 3D volume data by concatenating the plurality of captured images.

7. The image processing method of any of claims 4-6, wherein the generating the reconstructed image comprises generating a single reconstructed image by applying the sampling grid to the 3D volume data.

8. The image processing method of any of claims 2-7, wherein a size of the final image is determined based on a size of the predefined pixel grid.

9. The image processing method of any of claims 2-8, wherein the offset information comprises a plurality of pieces of reconstruction location information assigned to each pixel of the predefined pixel grid, and
wherein the generating the final image comprises generating the final image by convolving the plurality of pieces of reconstruction location information with the kernel weight,
preferably wherein a size of the kernel weight is determined based on the a of the plurality of pieces of reconstruction location information.

10. The image processing method of claim 1, wherein the reconstructed image has a resolution than higher than a resolution of the input image.

11. A non-transitory computer-readable storage medium storing instructions that, when executed by at least one processor, cause the at least one processor to perform the method of any of the preceding claims.

12. An electronic device, comprising:
at least one processor comprising processing circuitry; and
a memory configured to store instructions,
wherein the instructions, when executed by the at least one processor individually or collectively, cause the at least one processor to:
obtain an input image;
obtain a sampling grid in which offset information is assigned to a predefined pixel grid; and
apply the sampling grid to the input image to reconstruct pixels of the input image, to generate a reconstructed image,
wherein the offset information comprises reconstruction location information for each pixel of the predefined pixel grid.

13. The electronic device of claim 12, wherein the instructions, when executed by the at least one processor individually or collectively, cause the at least one processor to:
generate a final image by filtering the reconstructed image using a kernel weight.

14. The electronic device of claim 13, wherein the instructions, when executed by the at least one processor individually or collectively, cause the at least one processor to:
obtain the kernel weight by inputting the input image to an artificial neural network (ANN) model.

15. The electronic device of any of claims 12-14, wherein the instructions, when executed by the at least one processor individually or collectively, cause the at least one processor to:
obtain a plurality of input images; and
configure three-dimensional (3D) volume data by concatenating the plurality of input images.
